# DEMANDE DE BREVET EUROPEEN

(11) **EP 2 738 700 A1**
(43) Date de publication de la demande: **04.06.2014**
(21) Numéro de dépôt: 13195247.5
(22) Date de dépôt: 02.12.2013
(51) Int. Cl.: G06F 17/30, G06F 17/27

(54) **Procédé de génération automatique de requêtes SQL**

(30) Priorité: 03.12.2012 FR 1261543
(71) Demandeur: BULL SAS, 78340 Les Clayes sous Bois (FR)
(72) Inventeur: Ficet, Aline, 31350 Grigny (FR)
(74) Mandataire: Camus, Olivier Jean-Claude

(57) **Abrégé**

L'invention concerne un procédé de génération d'une requête SQL pour une base de données relationnelle à partir d'une ligne de commande, ladite base de données étant décrite par un schéma comprenant une description d'une pluralité de tables et une description des contraintes, ledit procédé comportant :
- Une analyse sémantique de la ligne de commande pour déterminer :
■ Un verbe de la requête, ledit verbe correspondant à l'une des actions sélectionner, supprimer, insérer ou mettre à jour
■ Une ou plusieurs tables concernées par la requête

- Si au moins deux tables concernées ont été déterminées, une analyse du plus court chemin entre lesdites tables, renvoyant une liste de tables comprises sur ledit plus court chemin
- Un calcul des jointures nécessaires pour joindre point à point les tables de ladite liste, à partir du schéma
- Une écriture de la requête SQL à partir du verbe et des jointures calculées.

## Description

### DOMAINE TECHNIQUE DE L'INVENTION

La présente invention se rapporte au domaine des bases de données relationnelles. Plus précisément, l'invention concerne un procédé de génération automatique d'une requête SQL dans une base de données relationnelle.

### ARRIERE PLAN TECHNOLOGIQUE DE L'INVENTION

Une base de données relationnelle est un ensemble structuré de données enregistrées sur des supports accessibles par ordinateur via un logiciel appelé système de gestion de base de données. Le système de gestion de base de données permet à des utilisateurs de créer et manipuler la base de données (ajouter des données, supprimer des données, retrouver des données, etc). La base de données relationnelle est modélisée par un ensemble de tables et de liens entre lesdites données : on parle de schéma conceptuel de base de données. Le langage standard de manipulation et restitution des données est le langage SQL (Structured Query Language). Une requête SQL est un texte qui donne un ordre à exécuter à un moteur de base de données sur une base de données. Elle peut mettre en jeu une table ou plusieurs. Si plusieurs tables sont mises en jeu, des jointures entre les tables sont nécessaires.

L'écriture d'une requête SQL dans une base de données relationnelle est dépendante du schéma de ladite base de données : il est nécessaire de connaître et maîtriser le schéma de la base de données pour écrire une requête SQL. En effet, les jointures associées doivent être précisées dans la requête, sauf si une seule table est utilisée.

De plus, un utilisateur ne connaissant rien à la syntaxe SQL peut utiliser un générateur de requête SQL mais ces dispositifs se cantonnent à une seule table. Ainsi, ces générateurs proposent des requêtes pré-écrites qui ne permettent pas forcément d'obtenir le critère voulu pour la recherche.

Par ailleurs, les applications de connexion aux systèmes de gestion de bases de données, c'est-à-dire les logiciels permettant d'exploiter le contenu des bases de données relationnelles, doivent être réécrites et réinstallées à chaque changement de schéma de base de données, par exemple un changement sur le nom d'une table ou sur un lien entre deux tables.

### DESCRIPTION GENERALE DE L'INVENTION

L'objet de l'invention offre une solution aux problèmes évoqués précédemment, en proposant un procédé de génération de requêtes SQL dans une base de données relationnelle à partir d'une ligne de commande qui n'est pas rédigée en langage SQL, et qui ne nécessite pas que l'utilisateur connaisse le schéma de la base de données.

L'invention concerne donc essentiellement un procédé de génération d'une requête SQL pour une base de données relationnelle à partir d'une ligne de commande, ladite base de données étant décrite par un schéma comprenant une description d'une pluralité de tables et une description des contraintes, ledit procédé comportant :
- Une analyse sémantique de la ligne de commande pour déterminer :
   ■ Un verbe de la requête, ledit verbe correspondant à l'une des actions sélectionner, supprimer, insérer ou mettre à jour
   ■ Une ou plusieurs tables concernées par la requête
- Si au moins deux tables concernées ont été déterminées, une analyse du plus court chemin entre lesdites tables, renvoyant une liste de tables comprises sur ledit plus court chemin
- Un calcul des jointures nécessaires pour joindre point à point les tables de ladite liste, à partir du schéma
- Une écriture de la requête SQL à partir du verbe et des jointures calculées.

Grâce à l'invention, l'utilisateur peut réaliser des actions dans la base de données selon n'importe quel critère, et générer n'importe quelle requête sans connaître le langage SQL ni le schéma de la base de données. Une connaissance globale du type de données contenues dans la base de données suffit.
- Le procédé selon l'invention peut présenter une ou plusieurs caractéristiques complémentaires parmi les suivantes, considérées individuellement ou selon toutes les combinaisons techniquement possibles : l'étape d'analyse sémantique permet de déterminer une condition SQL, et l'écriture de la requête est réalisée à partir de ladite condition.
- Si le verbe déterminé est « sélectionner », l'étape d'analyse sémantique permet de déterminer une colonne d'une table de laquelle extraire les éléments à sélectionner.
- Le procédé comporte une étape préalable de génération d'un graphe représentant les liens entre les tables.
- Le procédé comporte une étape de génération d'une matrice d'adjacence isomorphe audit graphe, et un élément aᵢⱼ de ladite matrice d'adjacence correspondant à une ligne i et une ligne j, vaut :
   ■ 0 si i=j
   ■ 1 si i≠j et la table i est liée à la table j
   ■ N sinon, avec N une valeur maximale.
      - Des éléments de la matrice d'adjacence sont modifiés selon un fichier de configuration.
      - Le calcul du plus court chemin est réalisé selon l'algorithme de Dijkstra.
      - L'étape d'analyse sémantique comprend une comparaison des termes de la commande utilisateur avec des termes d'un fichier d'acronyme.
      - L'étape d'analyse sémantique comprend une recherche par appariement de motifs.

L'invention et ses différentes applications seront mieux comprises à la lecture de la description qui suit et à l'examen des figures qui l'accompagnent.

### BREVE DESCRIPTION DES FIGURES

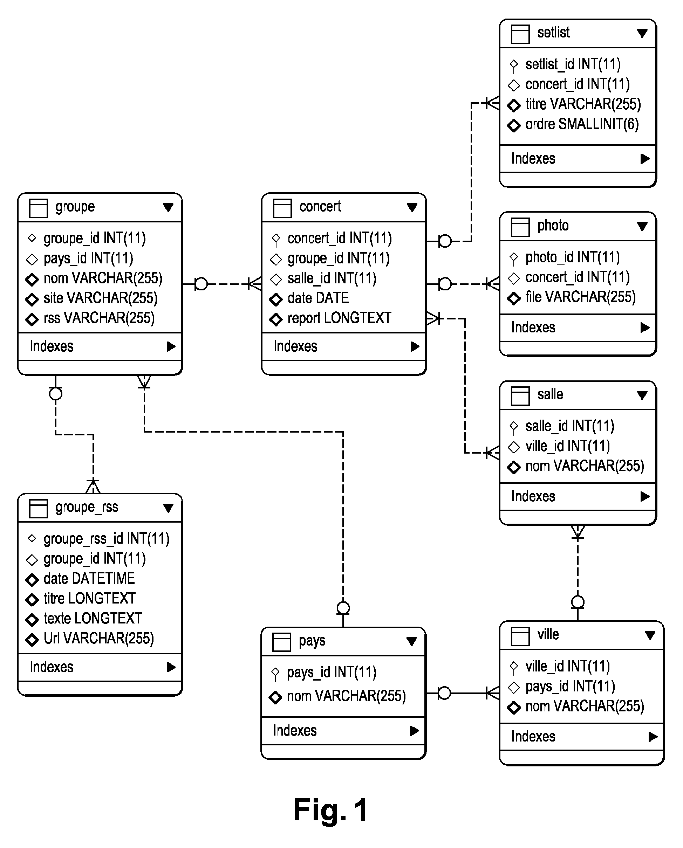

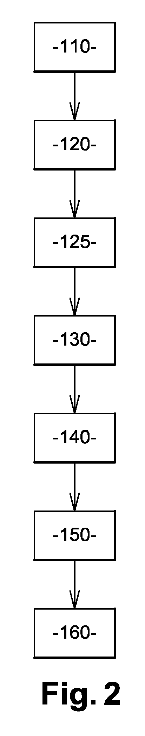

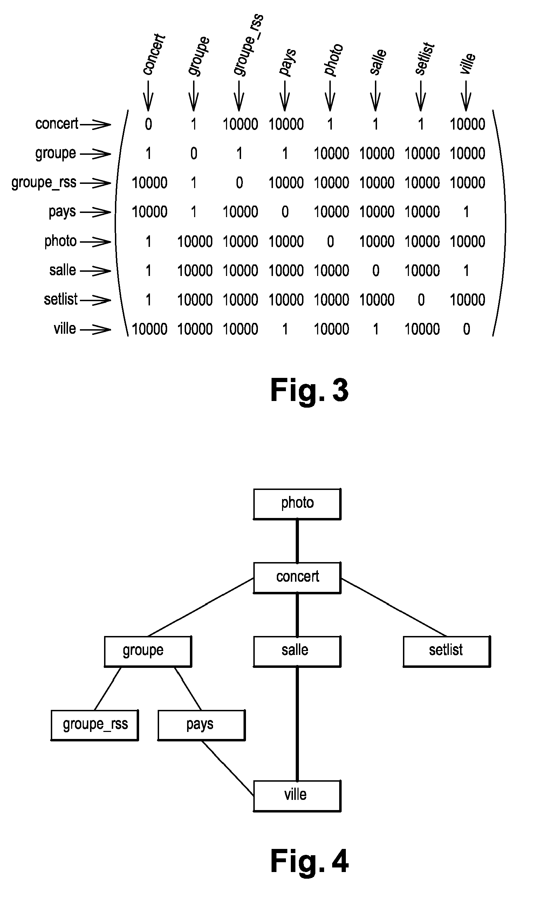

Les figures ne sont présentées qu'à titre indicatif et nullement limitatif de l'invention. Les figures montrent :
- A la figure 1, un schéma descriptif d'un exemple d'une base de données relationnelle ;
- A la figure 2, un diagramme représentant les étapes d'un procédé selon un mode de réalisation de l'invention ;
- A la figure 3, la matrice d'adjacence associée au schéma de la figure 1;
- A la figure 4, une illustration du mode de détermination du plus court chemin entre deux tables de la base de données de la figure 1

### DESCRIPTION DETAILLEE D'AU MOINS UN MODE DE REALISATION DE L'INVENTION

Sauf précision contraire, un même élément apparaissant sur des figures différentes présente une référence unique.

La figure 1 montre un schéma descriptif d'un exemple d'une base de données relationnelle. Ladite base de données relationnelle est modélisée par un ensemble de tables nommées concert, groupe, groupe_rss, pays, photo, salle, setlist et ville. Une table est constituée d'un ensemble de lignes et de colonnes. Une colonne correspond à une catégorie d'informations (une colonne stocke par exemple des numéros de téléphone, une autre stocke des noms...), et une ligne d'une table correspond à un enregistrement, également appelé entrée. L'intersection entre une ligne et une colonne est appelée un champ.

Chaque table comporte une catégorie correspondant à des clefs primaires. Une clef primaire est un identifiant qui permet d'identifier de manière unique un enregistrement dans la table. Dans l'exemple décrit :
- la table concert comporte des clefs primaires concert_id
- la table groupe comporte des clefs primaires groupe_id
- la table groupe_rss comporte des clef primaire groupe_rss_id
- la table pays comporte des clefs primaires pays_id
- la table photo comporte des clefs primaires photo_id
- la table salle comporte des clefs primaires salle_id
- la table setlist comporte des clefs primaires setlist_id
- la table ville comporte des clefs primaires ville_id

De plus, chaque table comporte éventuellement un ou plusieurs champs correspondant à des clefs étrangères. Une clef étrangère permet d'établir des liens entre des tables. Dans l'exemple décrit :
- la table concert comporte des clefs étrangères groupe_id et des clefs étrangères salle_id
- la table groupe comporte des clefs étrangères pays_id
- la table groupe_rss comporte des clefs étrangères groupe_id
- la table pays ne comporte pas de clefs étrangères
- la table photo comporte des clefs étrangères concert_id
- la table salle comporte des clefs étrangères ville_id
- la table setlist comporte des clefs étrangères concert_id
- la table ville comporte des clefs étrangères pays_id

Ainsi, il existe des liens entre les tables :
- concert et groupe
- concert et salle
- groupe et pays
- groupe_rss et groupe
- photo et concert
- salle et ville
- setlist et concert
- ville et pays

Les étapes d'un mode de réalisation d'un procédé de génération automatique d'une requête SQL dans une base de données relationnelle à partir d'une commande utilisateur, sont illustrées à la figure 2.

Le procédé selon l'invention est mis en oeuvre par un ordinateur. Ces mises en oeuvre sont réalisées via une implémentation sur un média de stockage non transitoire des codes instructions dont l'interprétation par un microprocesseur de l'ordinateur provoque la réalisation d'étapes dont celles de l'invention.

### Eta pe 110

La base de données est transformée automatiquement en un graphe dont chaque lien est le lien entre deux tables, matérialisé dans la table par des clefs étrangères. Ledit graphe est appelé « schéma » de la base de données. Il s'agit par exemple du graphe représenté en figure 1 et décrit précédemment.

### Eta pe 120

Une matrice d'adjacence isomorphe au dit graphe est créée. Une matrice d'adjacence d'un graphe fini à n sommets est une matrice de dimension n x n dont l'élément non diagonal aᵢⱼ est le poids de l'arête liant le sommet i au sommet j. L'élément diagonal aᵢᵢ est le poids des boucles au sommet i.

La matrice d'adjacence du graphe exemple est représentée à la figure 3. Chaque ligne et chaque colonne de la matrice correspondent à une table :
- la ligne 0 et la colonne 0 correspondent à la table concert
- la ligne 1 et la colonne 1 correspondent à la table groupe
- la ligne 2 et la colonne 2 correspondent à la table groupe_rss
- la ligne 3 et la colonne 3 correspondent à la table pays
- la ligne 4 et la colonne 4 correspondent à la table photo
- la ligne 5 et la colonne 5 correspondent à la table salle
- la ligne 6 et la colonne 6 correspondent à la table setlist
- la ligne 7 et la colonne 7 correspondent à la table ville

On appellera « table d'indice k » la table correspondant à la ligne et la colonne k. Dans l'exemple illustré à la figure 3, la matrice d'adjacence est telle qu'un élément aᵢⱼ vaut
- 0 si i=j
- 1 si i≠j et la table d'indice i est liée à la table d'indice j
- 10 000 sinon, c'est-à-dire si la table d'indice i n'est pas liée à la table d'indice j.
On dit que aᵢⱼ est le poids de l'arête liant la table i à la table j.

La matrice est enregistrée dans un fichier d'enregistrement, dont chaque ligne renseigne les poids. Chaque ligne est par exemple de la forme :
Nom_table_i.nom_table_j = aij, où Nom_table_i et Nom_table_j sont les noms des tables i et j.

Les poids indiqués ci-dessus sont des poids par défaut. En effet, dans un mode de réalisation de l'invention, une étape 125 consiste à modifier les poids par défaut si un fichier de configuration l'indique. Ainsi, un poids de valeur un peut être remplacé par un poids de valeur deux, par exemple.

Les étapes 110, 120 et 125 sont réalisées à chaque changement de schéma de base de données, par exemple si le nom d'une table est modifié ou si certains liens entre tables changent. Si le schéma ne change pas, on utilise la matrice stockée en mémoire dans le fichier d'enregistrement pour les étapes suivantes.

### Etape 130

Cette étape est réalisée lorsqu'un utilisateur produit une ligne de commande d'invocation de l'invention. La production de la ligne de commande est réalisée en mode console ou en mode intégré via l'appel à une interface de programmation. La ligne de commande n'est pas rédigée en langage SQL, elle est par exemple rédigée en langage naturel. Par exemple, si un utilisateur souhaite extraire une liste des photos de Paris de la base de données, la ligne de commande peut être « les photos de la ville de Paris ».

L'invention vise à transformer ladite ligne de commande en requête SQL.

L'étape 130 correspond à une étape d'analyse sémantique de la ligne de commande. L'analyse sémantique utilise un fichier d'acronymes qui permet d'associer des mots. Un tel fichier comporte une liste d'association. Une association est une chaîne de caractères du type : Mot1 séparateur Mot2. Séparateur est, par exemple, le symbole =. Dans notre exemple, la liste comporte au moins :
supprimer = delete
supprimer = erase
ville = city

Dans un mode de réalisation de l'invention, les formes dérivées d'un même mot sont associées, par exemple le pluriel, le masculin, le féminin...

L'analyse sémantique permet de déterminer :
- Un verbe de la requête, ledit verbe correspondant à l'une des actions sélectionner (SELECT), supprimer (DELETE), insérer (INSERT) ou mettre à jour (UPDATE). Par exemple, si la ligne de commande est « supprimer les photos de Paris » ou « delete pictures of Paris », le verbe déterminé est « supprimer ». En effet, le fichier d'acronyme indique par exemple que « supprimer » est associé à « delete », « erase », etc. Si la ligne de commande est « les photos de la ville de Paris », le verbe déterminé est « sélectionner ». En effet, le verbe est par défaut « sélectionner ».
- Une ou plusieurs tables concernées par la requête. Dans le cas de la ligne de commande « les photos de la ville de Paris », les tables concernées sont la table photo et la table ville. En effet, les mots photos et ville correspondent aux noms de deux tables dans l'exemple décrit à la figure 1. Par ailleurs le ficher d'acronymes permet de déterminer que « city » est associé à « ville » par exemple.
- Une condition SQL, qui correspond à la clause WHERE de la requête SQL. Cette condition est optionnelle. Dans le cas de la ligne de commandes « les photos de la ville de Paris », la condition est : la ville est Paris. Comme on le constate à la figure 1, la table ville comprend une catégorie nom correspondant aux noms des villes enregistrées dans la table. Ainsi, la condition SQL déterminée est « ville.nom='Paris' ». On note qu'une recherche par appariement de motifs peut être effectuée dans la ligne de commande. En effet, un utilisateur averti peut écrite par exemple « ville=Paris » dans sa ligne de commande, ce qui facilite la détermination de la condition.
- Si le verbe déterminé est « sélectionner », une colonne d'une table de laquelle extraire les données à sélectionner. Dans le cas de la ligne de commandes « les photos de la ville de Paris », l'analyse sémantique permet de déterminer que les données à sélectionner sont des photos, ainsi les données à sélectionner sont des éléments photo.file.

On note que le fichier d'acronymes peut être amendé par l'utilisateur.

### Eta pe 140

A partir de la matrice d'adjacence et des tables concernées déterminées dans l'étape 130, un algorithme du plus court chemin est utilisé pour calculer le plus court chemin entre lesdites tables.

Le plus court chemin d'une table i à une table j est celui correspondant à un poids minimal des arêtes empruntées pour joindre point à point la table i à la table j.

Dans le mode de réalisation décrit, l'algorithme du plus court chemin utilisé est l'algorithme de Dijkstra. Il s'agit de construire progressivement, à partir de la matrice d'adjacence, un sous-graphe dans lequel sont classées les différentes tables par ordre croissant de leur distance minimale à la table de départ. La distance correspond à la somme des poids des arêtes empruntées.

La figure 4 montre un exemple de la détermination du plus court chemin entre les tables photo et ville. A partir de la table photo, seule la table concert est accessible (on dit qu'une table est accessible depuis une autre table si ces deux tables sont liées). A partir de la table concert, les tables groupe, salle et setlist sont accessibles. A partir de la table groupe, les tables groupe_rss et pays sont accessibles. Enfin, à partir de la table salle et de la table pays, la table ville est accessible. Ainsi, pour aller de la table photo à la table ville, deux chemins sont possibles :
- Photo - concert - salle - ville dont la distance vaut trois
- Photo - concert - groupe - pays - ville dont la distance vaut quatre.

Le plus court chemin entre la table photo et la table ville est celui empruntant les tables concert et salle. On note que, puisque la matrice d'adjacence est symétrique, le plus court chemin d'une table i à une table j est aussi le plus court chemin de la table j à la table i.

### Etape 150

Deux tables successives sur le chemin le plus court doivent alors être jointes par une jointure SQL. Une jointure est une opération permettant de réunir des tables deux à deux via un produit cartésien des enregistrements dont certaines valeurs correspondent entre lesdites deux tables. Une jointure entre deux tables est possible si lesdites deux tables sont liées.

Grâce à la détermination du plus court chemin entre les tables déterminées, les jointures nécessaires pour joindre lesdites tables sont calculées. Par exemple, pour joindre la table photo à la table ville, trois jointures sont calculées :
- Une jointure entre la table photo et la table concert
- Une jointure entre la table concert et la table salle
- Une jointure entre la table salle et la table ville

On note qu'on recherche le plus court chemin entre les tables afin de minimiser le coût des jointures nécessaires.

On utilise avantageusement des jointures externes gauches (LEFT OUTER JOIN) mais dans d'autres modes de réalisation de l'invention, des jointures internes (INNER JOIN), externes droites (RIGHT OUTER JOIN) ou complètes (FULL JOIN) peuvent également être utilisées.

### Eta pe 160

La requête SQL est écrite à partir de tous les éléments déterminés lors de l'étape d'analyse sémantique, et des jointures calculées.

Dans l'exemple de ligne de commande « les photos de la ville de Paris » :
- le verbe est « sélectionner »
- les tables déterminées sont la table photo et la table ville
- les jointures sont :
   o Une jointure entre la table photo et la table concert
   o Une jointure entre la table concert et la table salle
   o Une jointure entre la table salle et la table ville
- La condition est « la ville est Paris »
- Les données à sélectionner sont des éléments file de la table photo

Ainsi, la requête SQL s'écrit :
SELECT *(verbe de la requête)*
p.file *(information à sélectionner)*
FROM
Photo p *(table concernée)*
LEFT OUTER JOIN concert c ON (c.concert_id=p.concert_id) *(première jointure)*
LEFT OUTER JOIN salle s ON (s.salle_id=c.salle_id) *(deuxième jointure)*
LEFT OUTER JOIN sale s ON (v.salle_id=s.salle_id) *(troisième jointure)*
WHERE
v.nom='Paris' *(condition).*

L'invention permet donc de générer n'importe quelle requête (SELECT, INSERT, UPDATE ou DELETE) de n'importe quelle partie de la base de données sans avoir besoin de les pré-écrire, et ainsi sans devoir connaître le schéma de la base de données ou le langage SQL.

## Revendications

1. Procédé de génération d'une requête SQL pour une base de données relationnelle à partir d'une ligne de commande, ladite base de données étant décrite par un schéma comprenant une description d'une pluralité de tables et une description des contraintes, ledit procédé comportant les étapes suivantes :
- Une analyse sémantique de la ligne de commande pour déterminer :
■ Un verbe de la requête, ledit verbe correspondant à l'une des actions sélectionner, supprimer, insérer ou mettre à jour
■ Une ou plusieurs tables concernées par la requête
- Si au moins deux tables concernées ont été déterminées, une analyse du plus court chemin entre lesdites tables, renvoyant une liste de tables comprises sur ledit plus court chemin
- Un calcul des jointures nécessaires pour joindre point à point les tables de ladite liste, à partir du schéma
- Une écriture de la requête SQL à partir du verbe et des jointures calculées.

2. Procédé selon la revendication précédente, **caractérisé en ce que** l'étape d'analyse sémantique permet de déterminer une condition SQL, et l'écriture de la requête est réalisée à partir de ladite condition.

3. Procédé selon l'une des revendications précédentes, **caractérisé en ce que**, si le verbe déterminé correspond à l'action sélectionner, l'étape d'analyse sémantique permet de déterminer une colonne d'une table de laquelle extraire les éléments à sélectionner.

4. Procédé selon l'une des revendications précédentes, **caractérisé en ce qu'**il comporte une étape préalable de génération d'un graphe représentant les liens entre les tables.

5. Procédé selon la revendication précédente, **caractérisé en ce qu'**il comporte une étape de génération d'une matrice d'adjacence isomorphe audit graphe, et un élément aij de ladite matrice d'adjacence correspondant à une ligne i et une ligne j, vaut :
- 0 si i=j
- 1 si i≠j et la table i est liée à la table j
- N sinon, avec N une valeur maximale.

6. Procédé selon la revendication précédente, **caractérisé en ce que** des éléments de la matrice d'adjacence sont modifiés selon un fichier de configuration.

7. Procédé selon l'une des revendications précédentes, **caractérisé en ce que** le calcul du plus court chemin est réalisé selon l'algorithme de Dijkstra.

8. Procédé selon l'une des revendications précédentes, caractérisé en ce l'étape d'analyse sémantique comprend une comparaison des termes de la commande utilisateur avec des termes d'un fichier d'acronyme.

9. Procédé selon l'une des revendications précédentes, **caractérisé en ce que** l'étape d'analyse sémantique comprend une recherche par appariement de motifs.
